# EUROPEAN PATENT SPECIFICATION

(11) **EP 3 437 452 B1**
(45) Date of publication and mention of the grant of the patent: **16.03.2022**
(21) Application number: 18186990.0
(22) Date of filing: 02.08.2018
(51) Int. Cl.: A01D 34/64, A01D 67/00

(54) **RIDING TYPE LAWNMOWER**
AUFSITZRASENMÄHER
TONDEUSE AUTOPORTEE

(30) Priority: 03.08.2017 JP 2017151085
(43) Date of publication of application: 06.02.2019
(73) Proprietor: Iseki & Co., Ltd., Matsuyama-shi, Ehime 799-2692 (JP)
(72) Inventor: GOTO, Renshi, Iyo-gun, Ehime 791-2193 (JP); TODA, Hirotaka, Iyo-gun, Ehime 791-2193 (JP); KURITA, Kazuyuki, Iyo-gun, Ehime 791-2193 (JP); KITAHARA, Yusuke, Iyo-gun, Ehime 791-2193 (JP); TSUNASHIMA, Taro, Iyo-gun, Ehime 791-2193 (JP); BABA, Yusuke, Iyo-gun, Ehime 791-2193 (JP)
(74) Representative: TBK

(56) References cited:
- DE-A1-102013 222 254
- JP-A- H03 123 409
- JP-U- H04 112 115
- US-A- 4 807 904
- US-A1- 2013 125 703
- US-A1- 2016 192 585
- US-A1- 2017 055 443

## Description

### [Technical Field]

The present invention relates to a riding type lawnmower.

### [Background Art]

Conventionally, there has been a riding type lawnmower in which an engine is arranged on a vehicle body frame disposed above an axle of a rear wheel and supporting substantially the entire vehicle body (see Patent Document 1, for example). US 2016/0192585 discloses a riding type lawnmower having the features of the preamble of claim 1.

### [Citation List]

### [Patent Document]

[Patent Document 1] JP 2007 267625 A
[Patent Document 2] JP H03 123409 A

### [Summary of the Invention]

### [Problems to be Solved by the Invention]

In order to carry out a ground work stably in the riding type lawnmower, the center of gravity is preferably located at a low position.

However, since the conventional riding type lawnmower as described above has the engine which is a heavy article arranged at a high position, the center of gravity is located at a high position. Thus, the conventional riding type lawnmower cannot carry out the stable ground work easily in some cases, and there has been a room for improvement for improving workability.

The present invention was made in view of the above and has an object to provide a riding type lawnmower which can improve workability and reduce the number of components.

### [Means for Solving the Problems]

The aforementioned object is achieved by a riding type lawnmower having the features of claim 1. Advantageous further developments are set out in the dependent claims.

### [Advantageous Effects of Invention]

By arranging the lower frame below the axle case by means of the present invention, the engine can be arranged at a low position in a machine body. As a result, the position of the center of gravity of the machine body can be lowered. By lowering the position of the center of gravity of the machine body as described above, the ground work can be carried out stably, and workability can be improved.

Moreover, by arranging the shaft extending along the longitudinal direction closer to either one of the right and left sides so as to avoid the engine, the engine can be arranged at a low position in the machine body. As a result, the position of the center of gravity of the machine body can be lowered, and by lowering the position of the center of gravity of the machine body, the ground work can be carried out stably, and workability can be improved.

According to the invention,
the frame constituting members provided side by side in the right-and-left direction regulate
a swing range of the axle case swinging around the swing shaft as the center. Since the lower frame functions as a member regulating the swing as above, a swing regulating member is no longer required, and the number of components can be reduced.

Moreover, maintenance of a radiator 61 and an air cleaner 62 can be carried out easily.

### [Brief Description of the Drawings]

[Fig. 1A] Fig. 1A is a left side view of a riding type lawnmower according to an embodiment.
[Fig. 1B] Fig. 1B is a right side view of the riding type lawnmower.
[Fig. 2] Fig. 2 is a transmission diagram of the riding type lawnmower.
[Fig. 3A] Fig. 3A is an explanatory view (No. 1) of a frame structure of a running vehicle body.
[Fig. 3B] Fig. 3B is an explanatory view (No. 2) of a frame structure of the running vehicle body.
[Fig. 3C] Fig. 3C is an explanatory view (No. 3) of a frame structure of the running vehicle body.
[Fig. 4] Fig. 4 is an arrangement explanatory view of a four-wheel drive shaft.
[Fig. 5A] Fig. 5A is an explanatory view (No. 1) of a connection structure between an HST unit and an HST pedal.
[Fig. 5B] Fig. 5B is an explanatory view (No. 2) of the connection structure between the HST unit and the HST pedal.
[Fig. 6A] Fig. 6A is an explanatory view (No. 1) of a frame structure around an engine.
[Fig. 6B] Fig. 6B is an explanatory view (No. 2) of the frame structure around the engine.
[Fig. 7] Fig. 7 is an explanatory view of arrangement of an axle.
[Fig. 8] Fig. 8 is an explanatory view of arrangement of a controller fuse.
[Fig. 9A] Fig. 9A is an explanatory view (No. 1) of arrangement of a four-wheel driving unit.
[Fig. 9B] Fig. 9B is an explanatory view (No. 2) of arrangement of the four-wheel driving unit.
[Fig. 10A] Fig. 10A is an explanatory view (No. 1) of arrangement of a radiator and an air cleaner.
[Fig. 10B] Fig. 10B is an explanatory view (No. 2) of arrangement of the radiator and the air cleaner.
[Fig. 11A] Fig. 11A is an explanatory view (No. 1) of a connection structure of the radiator and the air cleaner.
[Fig. 11B] Fig. 11B is an explanatory view (No. 2) of the connection structure of the radiator and the air cleaner.
[Fig. 12A] Fig. 12A is an explanatory view (No. 1) of an attachment/detachment structure of a radiator net.
[Fig. 12B] Fig. 12B is an explanatory view (No. 2) of the attachment/detachment structure of the radiator net.
[Fig. 13A] Fig. 13A is an explanatory view (No. 1) of an engine mount structure.
[Fig. 13B] Fig. 13B is an explanatory view (No. 2) of the engine mount structure.
[Fig. 14A] Fig. 14A is an explanatory view (No. 1) of a brake configuration.
[Fig. 14B] Fig. 14B is an explanatory view (No. 2) of the brake configuration.
[Fig. 15A] Fig. 15A is an explanatory view (No. 1) of a clutch disposed in a mission case.
[Fig. 15B] Fig. 15B is an explanatory view (No. 2) of the clutch disposed in the mission case.
[Fig. 16] Fig. 16 is an explanatory view of a driving circuit of a radiator fan.

### [Description of the Embodiments]

An embodiment of a riding type lawnmower disclosed in the present application will be described below in detail by referring to the attached drawings. The present invention is not limited by the embodiment illustrated below.

### <Entire constitution of riding type lawnmower 1>

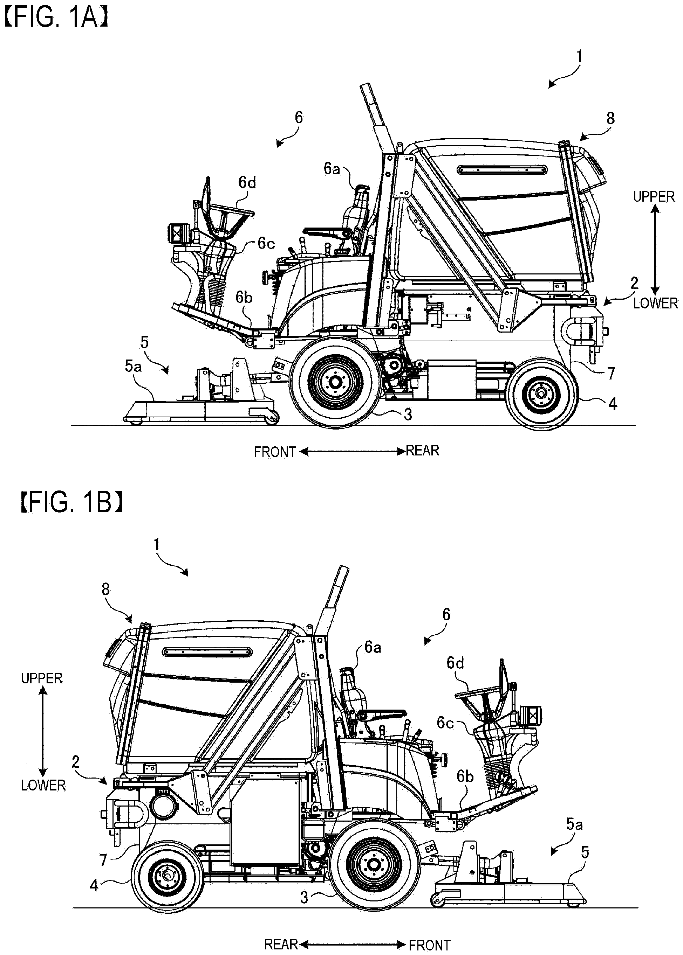

First, by referring to Figs. 1A and 1B, the entire constitution of a riding type lawnmower 1 will be described in brief. Fig. 1A is a left side view of the riding type lawnmower 1 according to an embodiment. Fig. 1B is a right side view of the riding type lawnmower 1 according to the embodiment. Moreover, the riding type lawnmower 1 is operated by an operator (also called a worker) seated on an operator's seat 6a provided on a front part of a running vehicle body 2.

Moreover, in the following description, a longitudinal direction is a traveling direction in advancing of the riding type lawnmower 1, and a front side of the traveling direction is specified as a "front" and a rear side as a "rear". The traveling direction of the riding type lawnmower 1 is a direction from the operator's seat 6a toward a steering wheel 6d in advancing of the riding type lawnmower 1 (see Figs. 1A and 1B).

Moreover, a right-and-left direction is a direction horizontally orthogonal to the longitudinal direction. In the following description, right and left are specified with respect to the "front" side. That is, in a state where the operator is seated on the operator's seat 6a and is directed to the front, the left hand side is "left" and the right hand side is "right". Moreover, an upper-and-lower direction is a vertical direction. The longitudinal direction, the right-and-left direction, and the upper-and-lower direction are orthogonal to each other three-dimensionally. Each direction is defined for convenience for ease of description, and the present invention is not limited by these directions. Moreover, in the following, the riding type lawnmower 1 is called a machine body in some cases.

As illustrated in Figs. 1A and 1B, the riding type lawnmower (hereinafter referred to as a lawnmower) 1 includes a pair of right and left wheels (front wheels) 3 on a front part of the running vehicle body 2 and a pair of right and left wheels (rear wheels) 4 on a rear part of the running vehicle body 2. Moreover, the lawnmower 1 includes a mower 5 having a cutting blade rotating around a vertical shaft (a shaft along the upper-and-lower direction in Figs. 1A and 1B) on a lower front side of the running vehicle body 2. The mower 5 is provided capable of elevation in front of the running vehicle body 2. Moreover, the lawnmower 1 includes an operation portion 6 on the front part of the running vehicle body 2.

The operation portion 6 includes the operator's seat 6a, a floor step 6b, a steering column 6c, and a steering wheel 6d. The floor step 6b is provided in front of the operator's seat 6a. The steering column 6c is installed upright on the front part of the floor step 6b. The steering wheel 6d is provided on the upper part of the steering column 6c. On the upper part of the steering column 6c, an operation panel, various operation levers, various operation switches and the like are provided in addition to the steering wheel 6d.

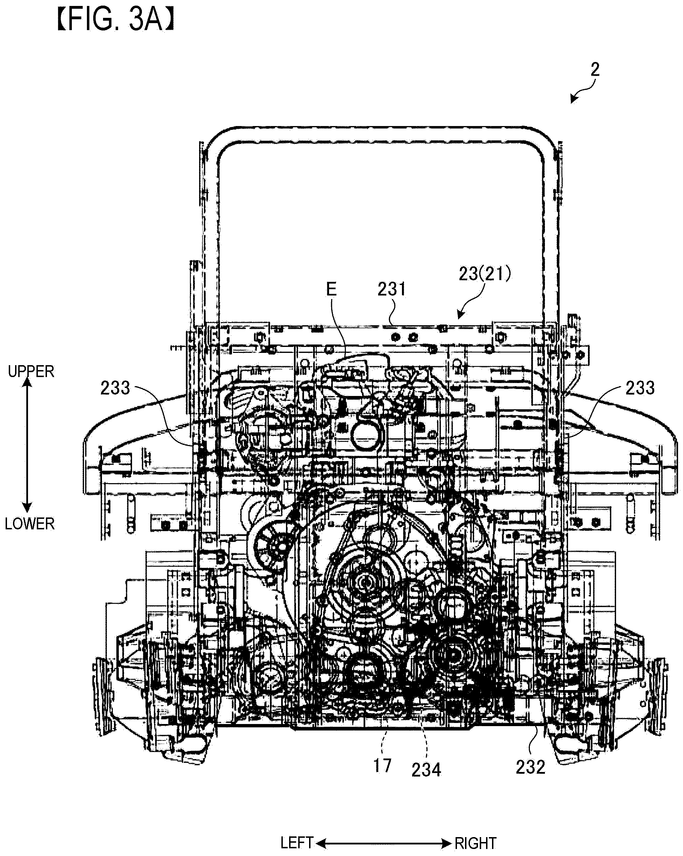

Moreover, the lawnmower 1 includes a vehicle body frame 21 and an engine E (see Figs. 3A to 3C) which will be described later forming the running vehicle body 2 on a rear part (on the rear of the operator's seat 6a) of the running vehicle body 2. Moreover, the lawnmower 1 includes a bonnet 7 covering the vehicle body frame 21 and the engine E and a collector 8 provided above the bonnet 7 on the rear part of the running vehicle body 2. The collector 8 is a container accommodating grass and the like mowed by the mower 5 (hereinafter referred to as grass).

Moreover, the lawnmower 1 includes a blower case incorporating a blower therein on the rear part of the running vehicle body 2. The blower case and the collector 8 are connected by a duct. Moreover, a chute is provided between the blower and the mower 5. In the lawnmower 1, the grass mowed by the mower 5 is sent to the blower from a mower deck 5a via the chute and is further conveyed by air to the collector 8 via the duct.

### <Transmission constitution of riding type lawnmower 1>

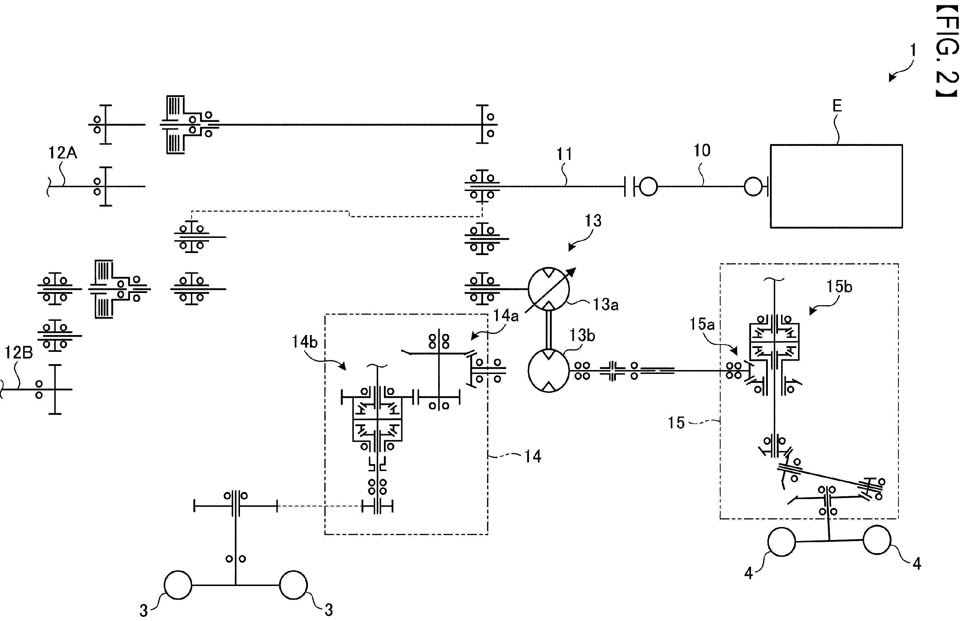

Subsequently, a transmission constitution of the lawnmower 1 will be described in brief by referring to Fig. 2. Fig. 2 is a transmission diagram of the riding type lawnmower (lawnmower) 1 according to the embodiment. As illustrated in Fig. 2, in the lawnmower 1, power (rotation power) output from the engine E is transmitted to a distribution transmission shaft 11 connected to an output shaft 10 of the engine E and is transmitted to a first PTO (power Take-off) shaft (also called a blower PTO shaft) 12A. The rotation power output from the blower PTO shaft 12A is transmitted to the aforementioned blower via a blower transmitting device (a gear transmitting device or the like), for example.

Moreover, the rotation power output from the distribution transmission shaft 11 is transmitted to a driving wheel via a running transmitting device. In this case, a hydraulic motor 13b is shifted by tilting of a trunnion shaft via a hydraulic pump 13a of a hydraulic continuously variable transmission (hereinafter, called HST (Hydro Static Transmission)) 13. Here, the lawnmower 1 is constituted capable of switching between two-wheel drive (2WD) and four-wheel drive (4WD). Thus, the driving wheels are any of the right and left front wheels 3 and the right and left rear wheels 4 (the right and left front wheels 3, for example) if the lawnmower 1 is two-wheel drive, and they are right and left front wheels 3 and the right and left rear wheels 4 if the lawnmower 1 is four-wheel drive.

The rotation power output from the distribution transmission shaft 11 is transmitted to the front wheel 3 via the hydraulic pump 13a and the hydraulic motor 13b of the HST13 and via a gear transmitting device 14a and a differential mechanism 14b in a differential case 14. Moreover, the rotation power output from the distribution transmission shaft 11 is transmitted to the rear wheel 4 via the hydraulic pump 13a and the hydraulic motor 13b of the HST 13 and via the gear transmitting device 15a and the differential mechanism 15b in the differential case 15.

Moreover, the rotation power output from the distribution transmission shaft 11 is transmitted to a second PTO shaft (also called a mower PTO shaft) 12B. The rotation power output from a mower PTO shaft 12B is transmitted to the aforementioned cutting blade via a mower input shaft and the mower transmitting device in the mower deck 5a.

### <Frame structure of running vehicle body 2>

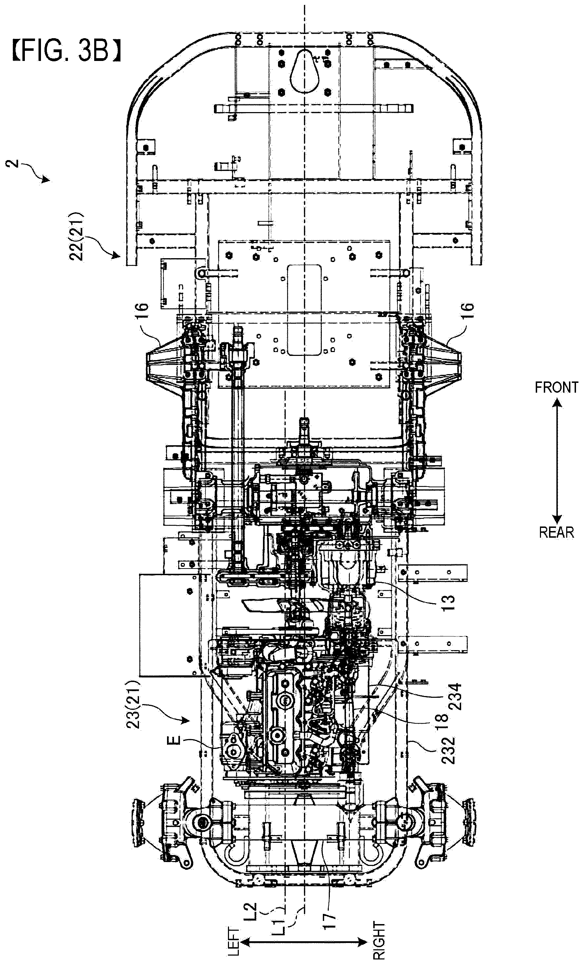

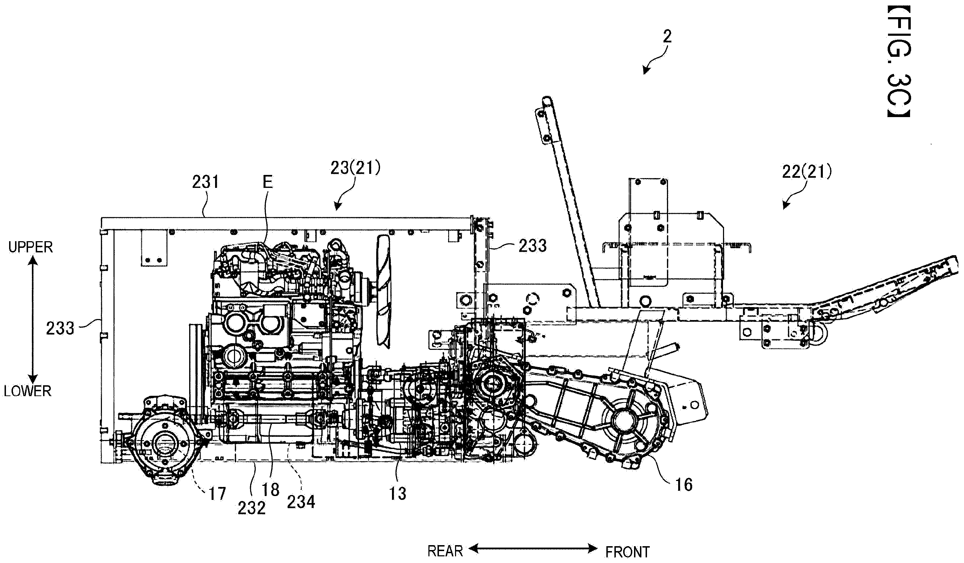

Subsequently, by referring to Figs. 3A to 3C, a frame structure (vehicle body frame 21) of the running vehicle body 2 will be described. Figs. 3A to 3C are explanatory views of the frame structure of the running vehicle body 2. Fig 3A illustrates a rear surface of the running vehicle body 2, Fig. 3B illustrates a plan of the running vehicle body 2, and Fig. 3C illustrates a right side surface of the running vehicle body 2. As illustrated in Figs. 3Ato 3C, the running vehicle body 2 includes the vehicle body frame 21. The vehicle body frame 21 is constituted by a front part 22 having a large right-and-left width and a rear part 23 having a small right-and-left width.

The front part 22 and the rear part 23 of the vehicle body frame 21 are fixed by welding or the like with centers in the right-and-left direction of the front part 22 and the rear part 23 aligned with each other, for example. On the front part 22 of the vehicle body frame 21, the operator's seat 6a is mounted on a rear half part, and the floor step 6b is formed on a front half part. Moreover, on the front part 22 of the vehicle body frame 21, the aforementioned HST13 and the differential case 14 (see Fig. 2), a front-wheel transmission case 16 and the like are mounted in a suspended state. The HST13 is arranged on the rear part 23 side of the vehicle body frame 21.

The rear part 23 of the vehicle body frame 21 includes an upper frame 231 and a lower frame 232. The upper frame 231 and the lower frame 232 are both rectangular frames elongated in the longitudinal direction. Moreover, the rear part 23 of the vehicle body frame 21 includes an intermediate frame 233 connecting the upper frame 231 and the lower frame 232 in a vertically aligned state. The rear part 23 of the vehicle body frame 21 is a rectangular frame having a cuboid (box-shaped) shape elongated in the longitudinal direction by the upper frame 231, the lower frame 232, and the intermediate frame 233.

The rear part 23 of the vehicle body frame 21 includes an engine mount portion 234 in which the engine E mounted on the lawnmower 1 (see Figs. 1A and 1B) is arranged in the cuboid-shaped rectangular frame formed by the upper frame 231, the lower frame 232, and the intermediate frame 233. The engine mount portion 234 supports the engine E from below through a rubber material (rubber mount). And the lower frame 232 supports the engine mount portion 234 from below.

Moreover, on the rear part 23 of the vehicle body frame 21, an axle case (rear-wheel axle case) 17 for accommodating the axle connecting the pair of right and left rear wheels 4 is mounted. The lower frame 232 is arranged lower than the rear-wheel axel case 17. The rear part 23 of the vehicle body frame 21 is formed as described above, and the lower frame 232 supporting the engine mount portion 234 from below is arranged lower than the rear-wheel axle case 17 so that the engine E is arranged at a low position in the vehicle body frame 21.

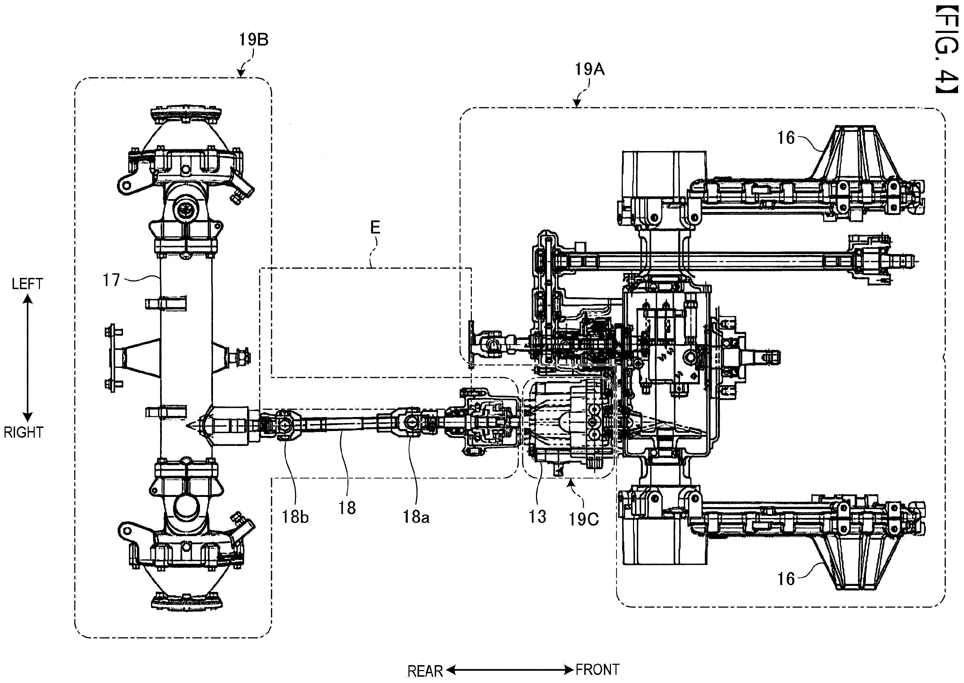

Here, by referring to Fig. 4, arrangement of a four-wheel drive shaft 18 will be described. Fig. 4 is an arrangement explanatory view of the four-wheel drive shaft 18. Fig. 4 illustrates a plan of the four-wheel drive shaft 18. The lawnmower 1 is constituted capable of being switched to a two-wheel drive (2WD) method driving only the right and left front wheels 3 and the four-wheel drive (4WD) method driving both the right and left front wheels 3 and the right and left rear wheels 4 as described above by a switching operation of a 4WD clutch provided on the operation portion 6, for example.

As illustrated in Fig. 4, the four-wheel drive shaft 18 is arranged between the pairs of right and left wheels (the right and left front wheels 3 and the right and left rear wheels 4) aligned in the longitudinal direction and extends along the longitudinal direction and transmits the rotation power from the engine E transmitted to either one of the front and rear drive wheels (front wheels 3) to the other drive wheels (rear wheels 4). The four-wheel drive shaft 18 has its front end portion connected to the HST13 side through a coupling 18a and has a rear end portion connected to the axle case 17 side of the rear wheels 4 through a coupling 18b.

Moreover, the four-wheel drive shaft 18 is arranged by being offset to the right-and-left direction so as to avoid the engine E arranged on the engine mount portion 234 (see Figs. 3B and 3C) to one of right and left sides (to the right, for example). By offsetting the four-wheel drive shaft 18 as described above, the engine E (specifically, an oil pan arranged below the engine E) and the four-wheel drive shaft 18 do not interfere with each other anymore, and the engine E is arranged at a low position in the vehicle body frame 21.

Returning to Fig. 3B, since a center line L2 of the engine E in the right-and-left direction is shifted to the other of the right and left sides which is a side opposite to the side where the four-wheel drive shaft 18 is offset with respect to a center line L1 of the machine body (vehicle body frame 21) in the right-and-left direction, interference between the engine E (oil pan) and the four-wheel drive shaft 18 can be eliminated more reliably.

Moreover, in Fig. 4, the power transmission mechanism mounted on the running vehicle body (see Fig. 3B) is surrounded by a one-dot chain line for each type. As illustrated in Fig. 4, the power transmission mechanism of the running vehicle body 2 is roughly divided into mechanic transmissions 19A and 19B, and an HST unit 19C including the HST13. As described above, by constituting the power transmission mechanism of the running vehicle body 2 by a combination of the mechanic transmissions 19A and 19B and the HST unit 19C, a running load can be reduced as compared with hydraulic driving for driving the respective driving wheels by the hydraulic motor, for example.

According to the frame structure as described above, by arranging the lower frame 232 supporting the engine mount portion 234 in the rear part 23 of the vehicle body frame 21 lower than the axle case 17 of the rear wheel 4, the engine E can be arranged at a low position in the machine body. As a result, a position of the center of gravity of the machine body can be lowered. By lowering the position of the center of gravity of the machine body as above, the ground work can be carried out stably, and workability can be improved. If the position of the center of gravity of the machine body is low, it is particularly stable in an inclined work.

Moreover, since the rear part 23 of the vehicle body frame 21 has the cuboid (box-shaped) rectangular frame structure, frame rigidity is improved, and a periphery of the engine E is made open, whereby accessibility to the engine E is improved. As a result, workability such as maintenance is improved.

Moreover, by arranging the four-wheel drive shaft 18 extending along the longitudinal direction close to either one side of the right and left so as to avoid the engine E, the engine E does not interfere with the four-wheel drive shaft 18, whereby the engine E can be arranged at a low position in the machine body. As a result, the position of the center of gravity of the machine body can be lowered, and by lowering the position of the center of gravity of the machine body, the ground work can be carried out stably, and workability can be improved.

### <Connection structure between HST unit 19C and HST pedal 25>

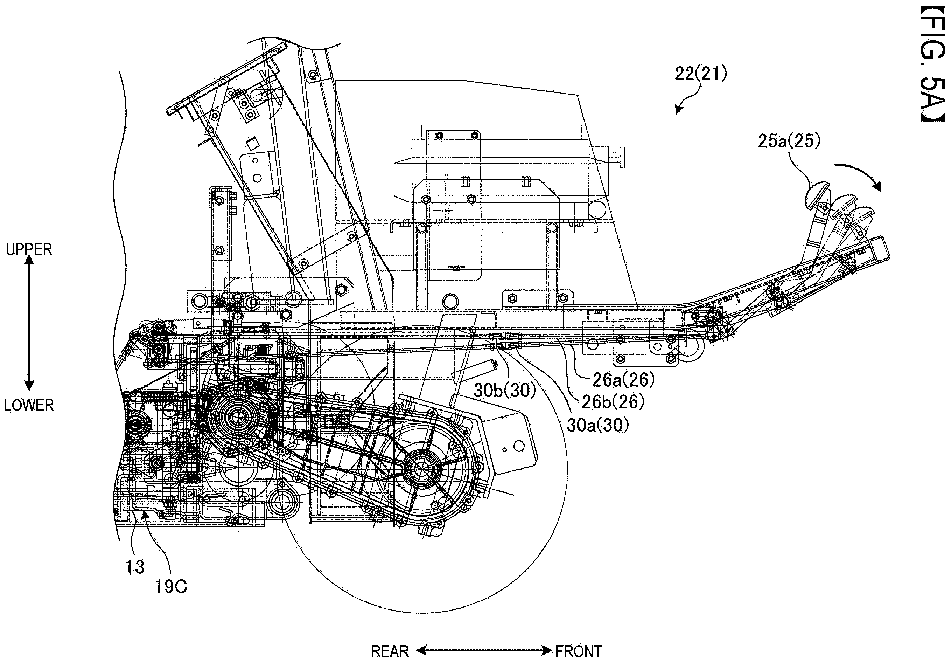

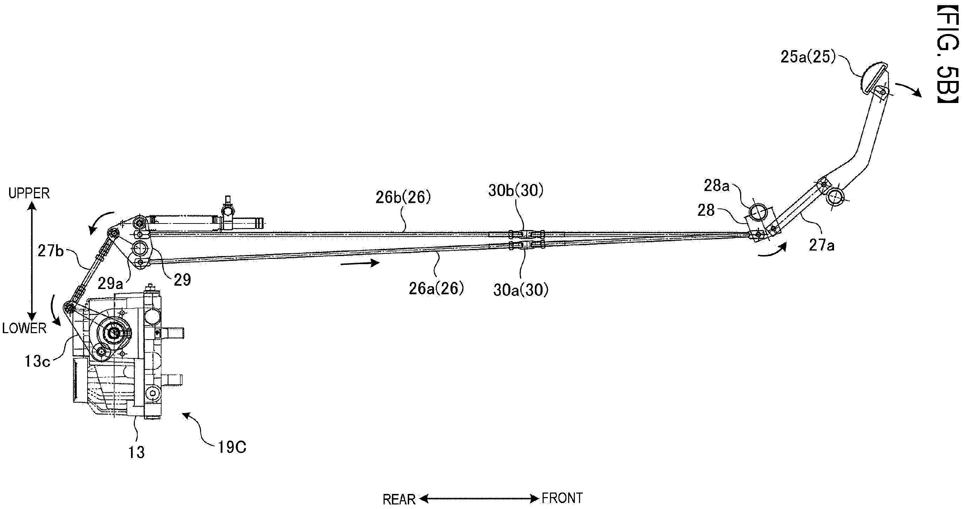

Subsequently, by referring to Figs. 5A and 5B, a connection structure of the HST unit 19C and an HST pedal 25 will be described. Figs. 5A and 5B are explanatory views of the connection structure of the HST unit 19C and the HST pedal 25. Fig. 5A illustrates a right side surface of the front part 22 of the vehicle body frame 21 (HST unit 19C and the HST pedal 25) and Fig. 5B illustrates an enlarged right side surface of the HST unit 19C and the HST pedal 25.

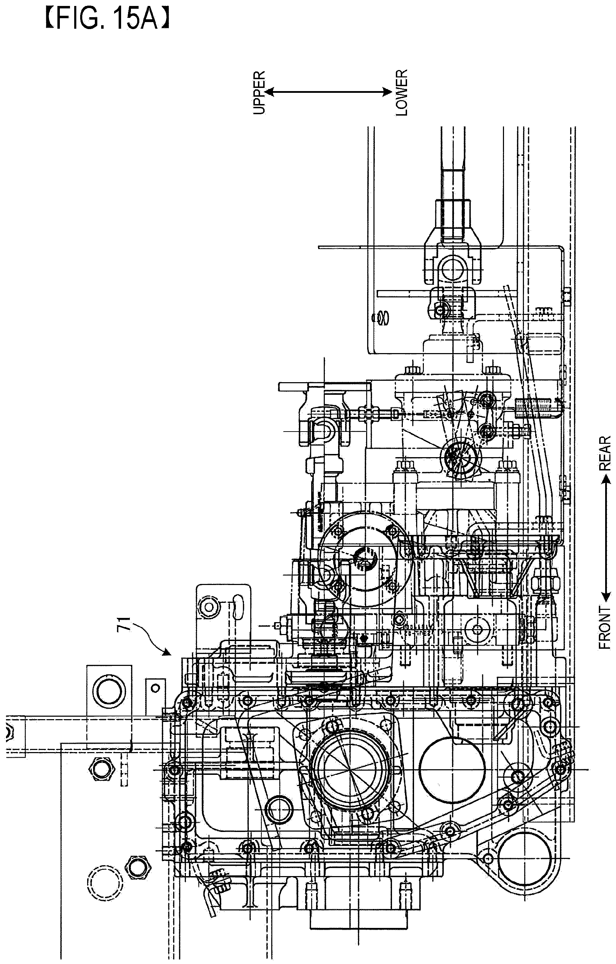

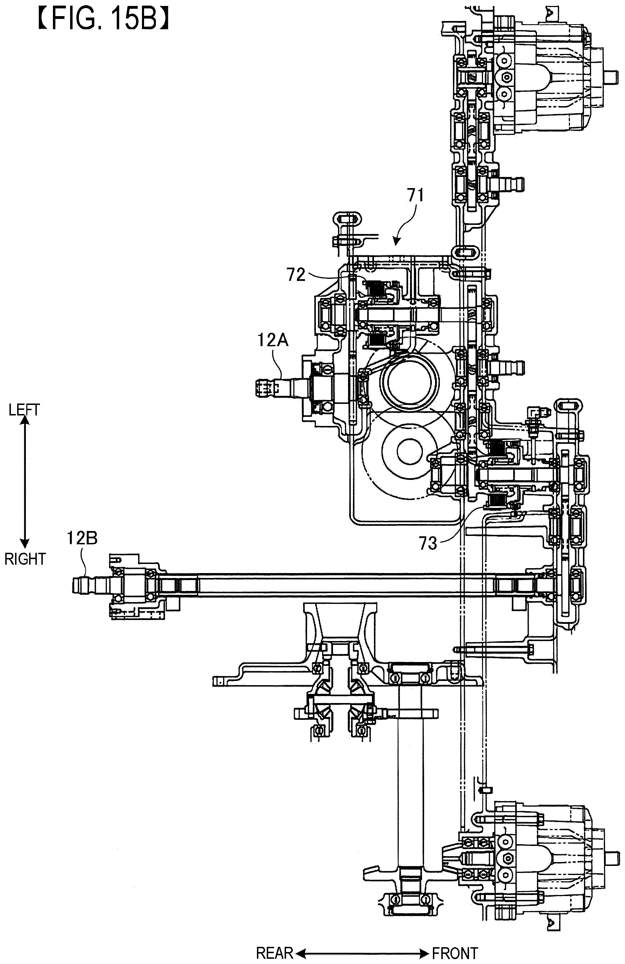

As illustrated in Fig. 5A, on the front part 22 of the vehicle body frame 21, the HST pedal 25 stepped on and operated by the operator when the machine body is moved forward/backward by operating a trunnion arm 13c (see Fig. 5B) of the HST unit 19C (HST13) provided in a mission case 71 (see Figs. 15A and 15B) is provided. The HST pedal 25 is arranged on the right side of the steering column 6c (see Fig. 1B) on the floor step 6b. The HST pedal 25 includes a forward pedal 25a operated when the machine body is to be moved forward and a reverse pedal operated when the machine body is moved backward. The forward pedal 25a and the reverse pedal are arranged side by side in the right-and-left direction of the machine body. Figs. 5A and 5B illustrate only the forward pedal 25a.

The HST pedal 25 realizes continuously variable transmission corresponding to forward acceleration, neutral, and reverse acceleration by adjustment of a trunnion opening of the HST13 in accordance with a stepped-on operation. When the stepped-on operation on the HST pedal 25 is not carried out, neutrality of the trunnion shaft is maintained by acting of a spring recovering force, for example.

As illustrated in Figs. 5A and 5B, two rods 26 are provided between the HST pedal 25 (25a) and the trunnion arm 13c of the HST unit 19C. The two rods 26 are arranged toward the longitudinal direction and connect the HST pedal 25 (25a) and the trunnion arm 13c. Moreover, in the two rods 26, one is a rod (called a forward rod) 26a for forward traveling operated when the machine body is to be moved forward (when the forward pedal 25a is stepped on), while the other is a rod (called a reverse rod) 26b for reverse traveling when the machine body is to be moved backward (when the reverse pedal is stepped on).

As illustrated in Fig. 5B, the forward rod 26a and the reverse rod 26b have front end portions connected to a front-side arm 28 connected to a rod member 27a extended from the HST pedal 25 and rear end portions connected to a rear-side arm 29 connected to a rod member 27b extended from the trunnion arm 13c, respectively. Here, by arranging the forward rod 26a on a lower side, by arranging the reverse rod 26b on an upper side, by connecting to the front-side arm 28 at the same fulcrum below a rotation fulcrum 28a, and by connecting to the rear-side arm 29 above and below a rotation fulcrum 29a with the rotation fulcrum 29a between them, for example, a link mechanism by the two rods 26 (26a, 26b) is realized. That is, when the forward pedal 25a is stepped on, the forward rod 26a is pulled to the front, and the trunnion arm 13c is operated (rotationally moved) to the forward side. When the reverse pedal is stepped on, the reverse rod 26b is pulled to the front, and the trunnion arm 13c is operated (rotationally moved) to the reverse side (the side opposite to the forward side).

If a the HST pedal 25 and the trunnion arm 13c of the HST unit 19C are connected by a wire cable that can be handled easily, for example, resistance can occur at a bent portion and movement of the wire cable becomes poor depending on a cabling state of the wire cable, which is a demerit, but there is no such demerit in the case of a so-called mechanical link using the rod 26. Moreover, since it is transmission constitution by pulling of the rod 26 when the HST pedal 25 is stepped on, it functions as the mechanical link even if the rod 26 is formed having a small diameter.

Moreover, each of the forward rod 26a and the reverse rod 26b has an adjustment portion 30 (30a, 30b) provided in a middle position in the longitudinal direction so that they are adjustable. A turnbuckle is preferable, for example, as the adjustment portion 30. As described above, since the lengths of the forward rod 26a and the reverse rod 26b are adjustable, rattling of each component or the link constitution can be suppressed by length adjustment.

### <Frame structure around engine E>

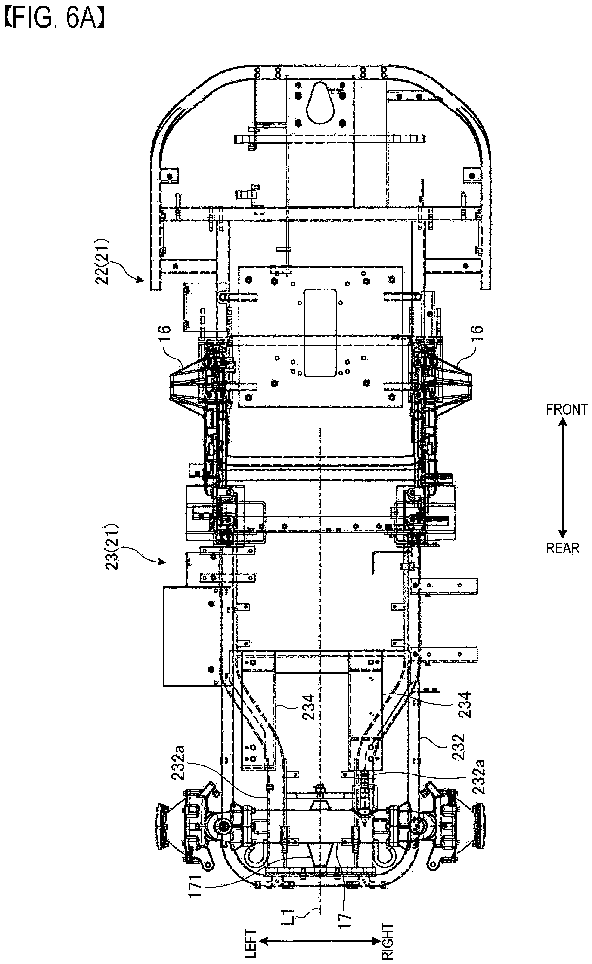

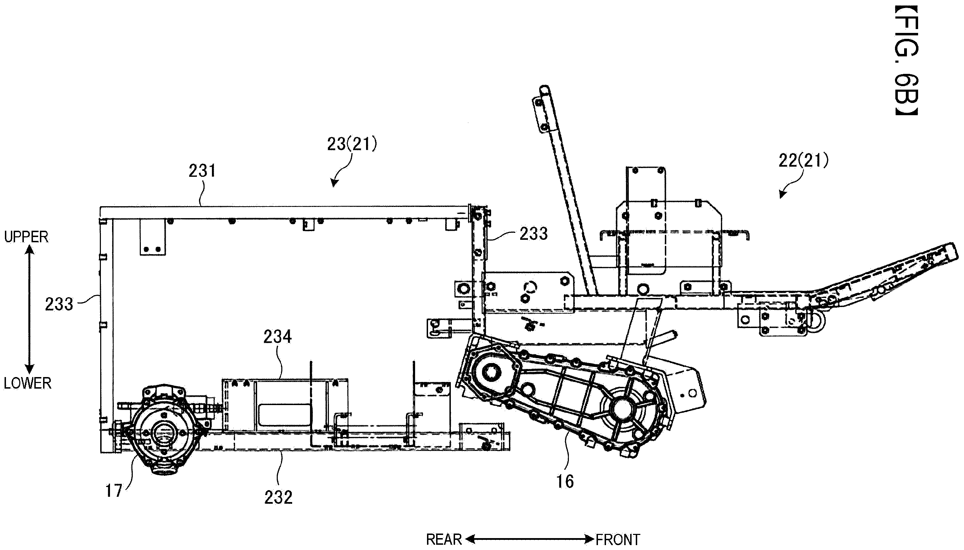

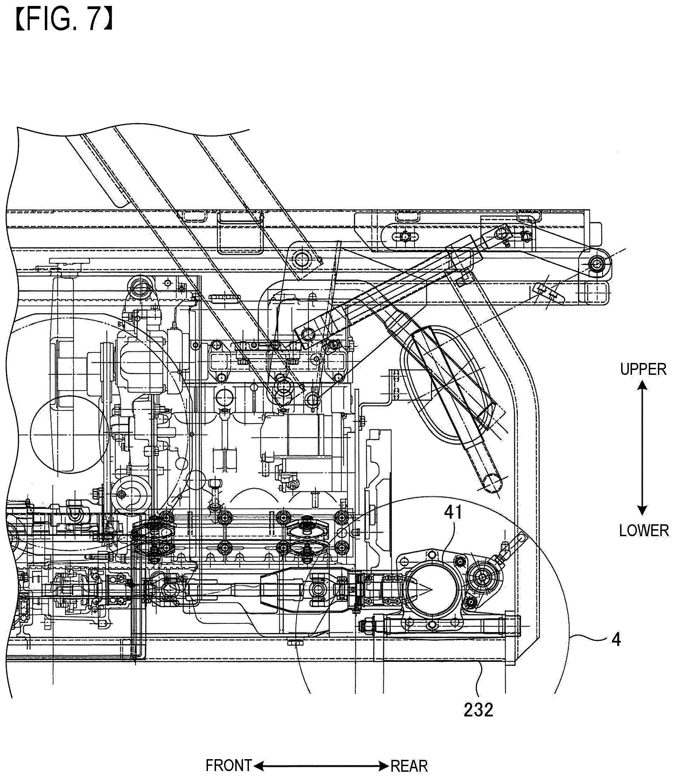

Subsequently, by referring to Figs. 6A to 7, the frame structure around the engine E will be further described. Fig. 6A and Fig. 6B are explanatory views of the frame structure around the engine E. Fig. 7 is an arrangement explanatory view of an axle (an axle of the rear wheel 4 (rear-wheel axle) or also called a rear axle) 41. Fig. 6A illustrates a plan of the vehicle body frame 21, and Fig. 6B illustrates a right side surface of the vehicle body frame 21. In Figs. 6A and 6B, a front-wheel transmission case 16 and a rear-wheel axle case 17 are assembled to the vehicle body frame 21. Moreover, Fig. 6B also illustrates a frame constituting member 232a which will be described later provided in the lower frame 232. Moreover, Fig. 7 illustrates an enlarged side surface of the rear-wheel axle 41.

As illustrated in Figs. 6A and 6B and as described above, the vehicle body frame 21 is constituted by the front part 22 and the rear part 23, and the rear part 23 in them is formed having a cuboid (box-shaped) rectangular frame. Moreover, as described above, the rear part 23 of the vehicle body frame 21 includes the upper frame 231, the lower frame 232, and the intermediate frame 233. The lower frame 232 among the upper frame 231, the lower frame 232, and the intermediate frame 233 is a main frame in the rear part 23 and as illustrated in Fig. 7, is arranged below the rear-wheel axle 41. As a result, the lower center of gravity of the machine body is made possible.

As illustrated in Fig. 6B, the lower frame 232 includes a plurality of frame constituting members 232a provided side by side in the right-and-left direction. The number of frame constituting members 232a is at least two or more (preferably two). The plurality of (two) frame constituting members 232a is arranged at an equal distance to the right and left from the center line L1 in the right and-left direction of the running vehicle body 2 (vehicle body frame 21) above the rear-wheel axle case 17. Here, the rear wheel axle case 17 is provided capable of swing in a rolling direction of the machine body around a swing shaft 171. The swing shaft 171 is provided on the center line L1 in the right-and-left direction of the vehicle body frame 21. That is, the swing shaft 171 is provided in the middle in the right-and-left direction with respect to the two frame constituting members 232a.

According to the frame structure as above, the frame constituting members 232a provided side by side in the right-and-left direction regulate a swing range of the rear-wheel axle case 17 swinging around the swing shaft 171. As described above, since the lower frame 232 functions as a member for regulating the swing, a swing regulating member is not needed anymore, and the number of components can be reduced.

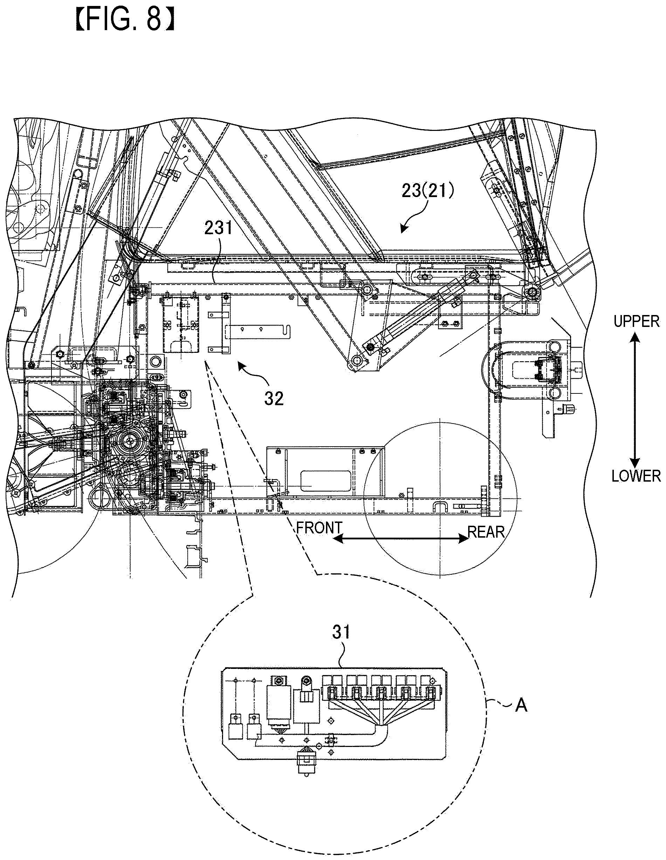

Moreover, Fig. 8 is an arrangement explanatory view of a controller/fuse 31. Fig. 8 illustrates an enlarged left side surface of the vehicle body frame 21. Moreover, Fig. 8 illustrates the controller/fuse 31 in an enlarged manner in an A part. As illustrated in Fig. 8, a mounting stay 32 of the controller/fuse 31 is provided inside the rear part 23 of the vehicle body frame 21 and on a lower part of the upper frame 231. The controller/fuse 31 is mounted on the mounting stay 32 and is arranged in a concentrated manner below the upper frame 231. As described above, since the controller/fuse 31 is arranged in the cuboid (box-shaped) rectangular frame in the concentrated manner on the rear part 23 of the vehicle body frame 21, accessibility to the controller/fuse 31 is improved. As a result, maintainability is improved. Moreover, the space can be effectively utilized.

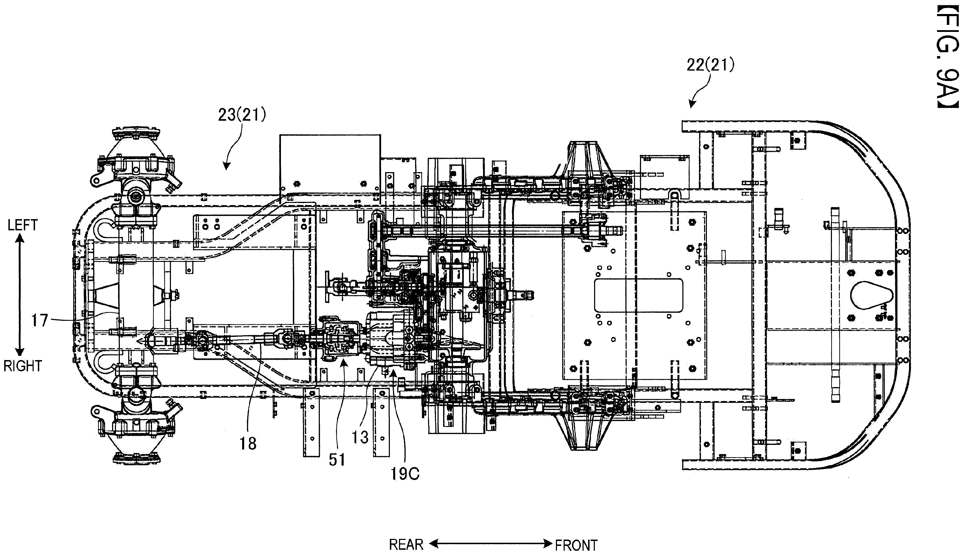

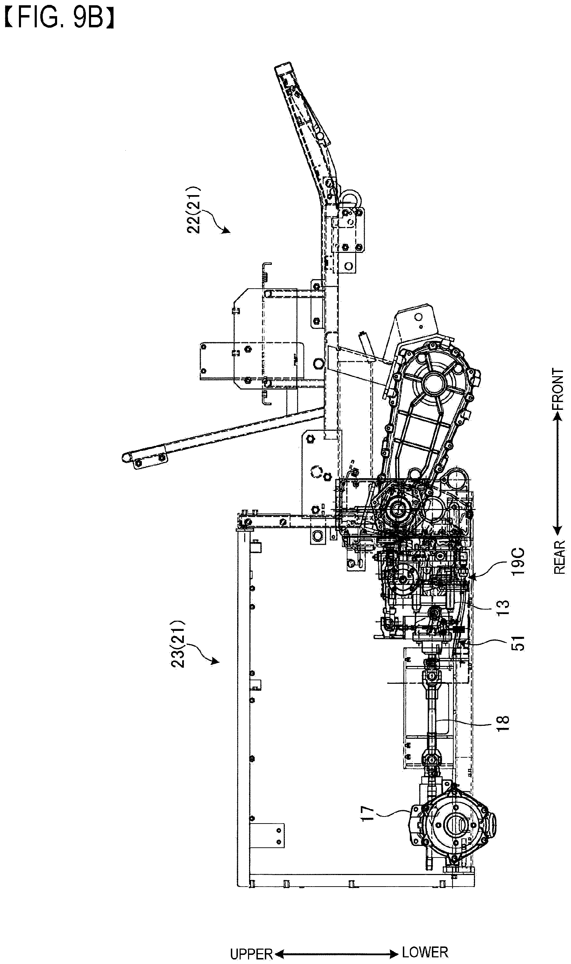

Moreover, Figs. 9A and 9B are arrangement explanatory views of a four-wheel drive unit 51. Fig. 9A illustrates a plan of the vehicle body frame 21, and Fig. 9B illustrates a right side surface of the vehicle body frame 21. In Figs. 9A and 9B, other than the four-wheel drive unit 51 for automatically switching running of the machine body from the two-wheel drive to the four-wheel drive, the front-wheel transmission case 16, the rear-wheel axle case 17, the four-wheel drive shaft 18, and the HST unit 19C are assembled to the vehicle body frame 21.

As illustrated in Figs. 9A and 9B, the four-wheel drive unit (also called an auto 4WD unit) 51 is arranged immediately after the HST unit 19C. As described above, by arranging the four-wheel drive unit 51 immediately after the HST unit 19C, there is no more need to provide the four-wheel drive unit 51 on the rear-wheel axle case 17 side and thus, the rear-wheel axle case 17 can be constituted with a smaller size. As a result, a space for arranging the engine E (see Figs. 3A to 3C) at a low position on the rear part 23 of the vehicle body frame 21 can be ensured.

### <Radiator 61 and air cleaner 62>

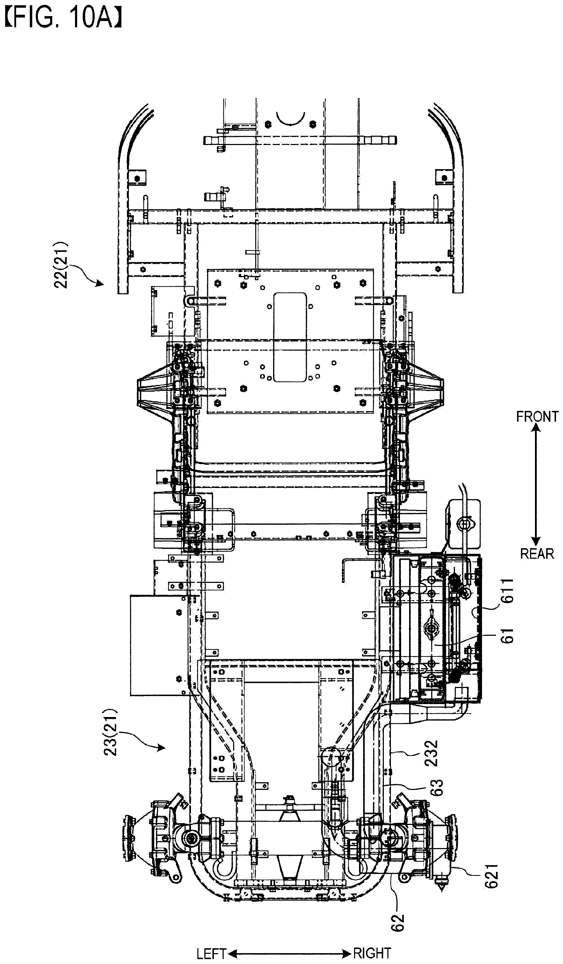

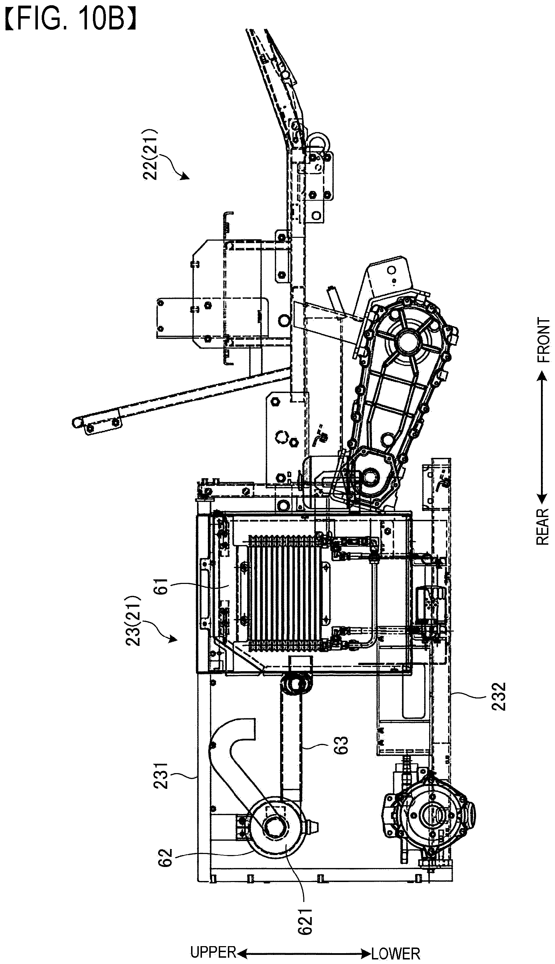

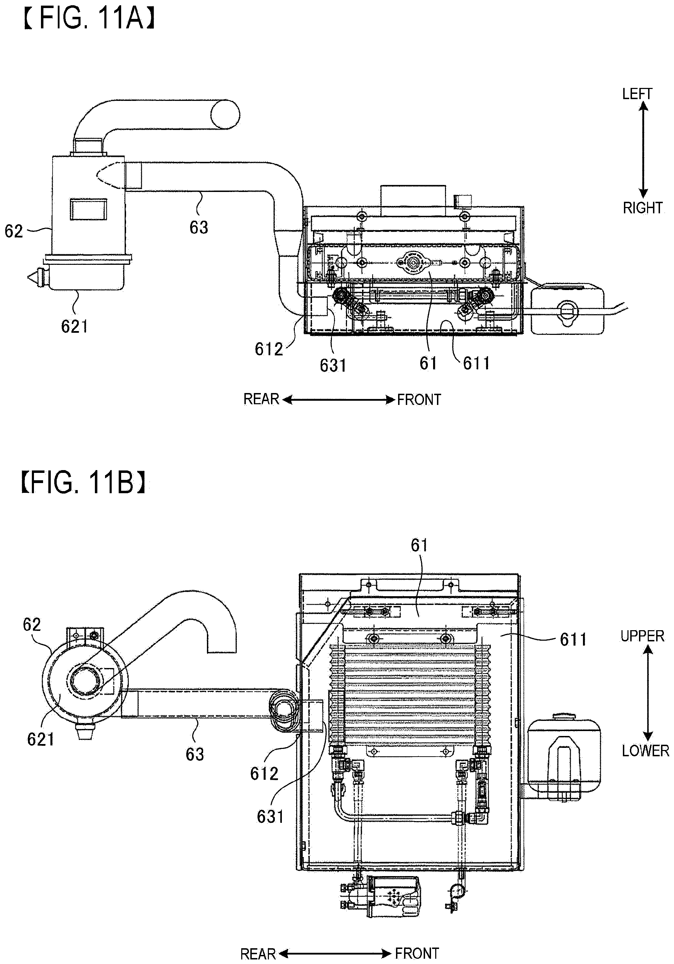

Subsequently, arrangement constitution of the radiator 61 and the air cleaner 62 will be described by referring to Figs. 10A and 10B and a connection structure of the radiator 61 and the air cleaner 62 by referring to Figs. 11A and 11B. In the following, first, the arrangement constitution of the radiator 61 and the air cleaner 62 will be described, and then, the connection structure of the radiator 61 and the air cleaner 62 will be described. Figs. 10A and 10B are arrangement explanatory views of the radiator 61 and the air cleaner 62. Fig. 10A illustrates a plan of the vehicle body frame 21, and Fig. 10B illustrates a right side surface of the vehicle body frame 21.

As illustrated in Figs. 10A and 10B, the radiator 61 is arranged on either one of the right and left side parts (right side part) of the rear part 23 of the vehicle body frame 21. Moreover, the air cleaner 62 is arranged on either one of the right and left side parts (right side part) of the rear part 23 of the vehicle body frame 21. The radiator 61 is arranged laterally so as to face the right-and-left direction. As described above, since the radiator 61 is arranged laterally, the radiator 61 is arranged on the side of the engine E, and they are not aligned in the longitudinal direction and thus, an entire length (longitudinal length) of the vehicle body 21 can be reduced, and size reduction of the machine body can be realized. The radiator 61 is covered by a radiator net 611 which will be described later on an outer side part. The air cleaner 62 is arranged on the rear of the radiator 61. Moreover, the air cleaner 62 is arranged by protruding outward from the rear part 23 of the vehicle body frame 21.

The radiator 61 and the air cleaner 62 are connected by a pipeline (suction pipe) 63. The air cleaner 62 applies purification processing to air flowing into the suction pipe 63 and supplies it to the engine E (see Fig. 3B). Moreover, as illustrated in Fig. 10B, a lid 621 of the air cleaner 62 is arranged closer to the outer side than the rear part 23 of the vehicle body frame 21.

According to the arrangement constitution as above, on the rear part 23 of the vehicle body frame 21, the air cleaner 62 protrudes outward from the rear part 23 (the upper frame 231 and the lower frame 232) of the vehicle body frame 21 and thus, an access to the air cleaner 62 is made easy. The air cleaner 62 needs regular maintenance such as cleaning or replacement of a filter, but the maintenance of the air cleaner 62 can be made easily by that.

Moreover, since the air cleaner 62 is arranged on the rear part 23 of the vehicle body frame 21 which is a cuboid-shaped rectangular frame, the air cleaner 62 can be arranged at a position where maintenance can be made easily and also can be stably arranged.

Figs. 11A and 11B are explanatory views of the connection structure of the radiator 61 and the air cleaner 62. Fig. 11A illustrates plans of the radiator 6 1 and the air cleaner 62, and Fig. 11B illustrates right side surfaces of the radiator 61 and the air cleaner 62.

As illustrated in Figs. 11A and 11B, the radiator 61 has a portion exposed to an outside (an outer side part) covered by the radiator net 611 so that dusts or the like do not enter from the outside of the machine body during suctioning by a radiator fan. Moreover, an end portion of the suction pipe 63 on the radiator 61 side is inserted into a hole 612 formed in the radiator net 611 and is arranged in an internal space of the radiator net 611. Thus, a suction port 631 of the suction pipe 63 is arranged in the internal space of the radiator net 611.

According to the connection structure as above, since the end portion of the suction pipe 63 on the radiator 61 side is arranged in the internal space of the radiator net 611, suctioning of dusts or the like of the outside of the machine body can be prevented. As a result, clogging of the air cleaner 62 caused by suctioning of the dusts or the like can be prevented.

### <Attachment/detachment structure of radiator net 611>

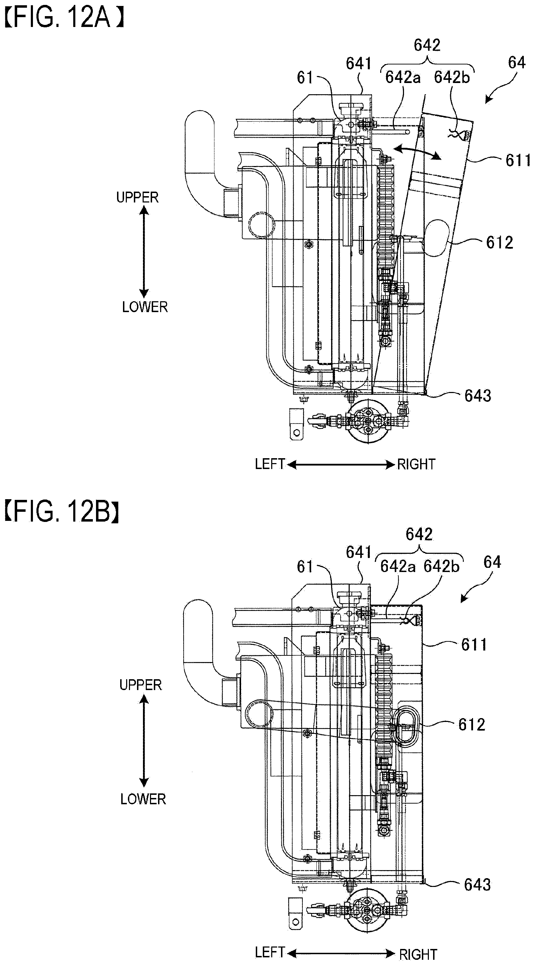

Subsequently, by referring to Figs. 12A and 12B, an attachment/detachment structure of the radiator net 611 will be described. Figs. 12A and 12B are explanatory views of the attachment/detachment structure of the radiator net 611. Figs. 12A and 12B illustrate a rear surface of a radiator unit 64 including the radiator 61. Moreover, Fig. 12A illustrates a state of the middle of mounting or removal of the radiator net 611 and Fig. 12B illustrates a state where the radiator net 611 has been mounted.

As illustrated in Fig. 12A, the radiator unit 64 includes a radiator bracket 641, a fixing portion 642, and a supporting portion 643 in addition to the aforementioned radiator 61 and the radiator net 611. The radiator bracket 641 has a box shape, for example, and accommodates the radiator 61 therein. In the radiator bracket 641, a surface directed to an outer side of the vehicle body frame 21 (see Fig. 3B) is open, and the radiator net 611 is mounted on the open surface. The fixing portion 642 fixes the radiator net 611 when the radiator net 611 is mounted on the radiator bracket 641. The supporting portion 643 supports the radiator net 611 arranged on the open surface of the radiator bracket 641 from below when the radiator net 611 is mounted on the radiator bracket 641.

The fixing portion 642 includes a fixing bar 642a and a fixing clip 642b. The fixing bar 642a is provided on the open surface of the radiator bracket 641 and has a bar portion crossing this surface in the longitudinal direction, for example. The fixing clip 642b is provided on an inner side surface of the box-shaped radiator net 611 and is engageable with the bar portion of the fixing bar 642a, for example. The supporting portion 643 is provided by protruding outward on a lower part of the radiator bracket 641, and a lower-end edge portion of the radiator net 611 is placed thereon. The supporting portion 643 is a hook extended in the longitudinal direction, for example.

When the radiator net 611 is to be mounted on the radiator bracket 641, the lower end edge portion of the radiator net 611 is placed on the supporting portion 643 and is rotated to a closing direction with a portion placed on the supported portion 643 as a fulcrum so that the fixing clip 642b is engaged with the fixing bar 642a of the fixing portion 642. When the radiator net 611 is to be removed, it is rotated to the opening direction using the portion placed on the supporting portion 643 as a fulcrum so that the engagement of the fixing portion 642 is disengaged, and the radiator net 611 can be removed. As described above, the radiator net 611 can be easily mounted or removed without using a tool or the like. As a result, maintainability is improved.

### <Engine mount structure>

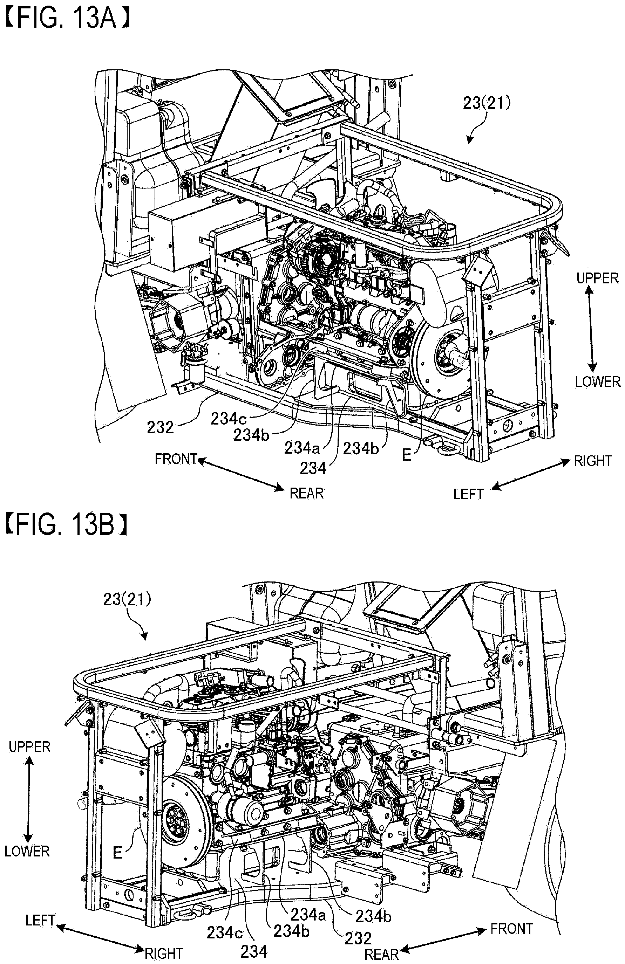

Subsequently, by referring to Figs. 13A and 13B, an engine mount structure (the engine mount portion 234) will be further described. Figs. 13A and 13B are explanatory views of the engine mount structure. Fig. 13A illustrates the rear part 23 of the vehicle body frame 21 from upper left on the rear, and Fig. 13B illustrates the rear part 23 of the vehicle body frame 21 from upper right on the rear.

As illustrated in Figs. 13A and 13B, the engine mount portion 234 supporting the engine E from below on the rear part 23 of the vehicle body frame 21 includes a bent plate 234a and a rib 234b. he bent plate 234a is provided on the lower frame 232 of the rear part 23 in the vehicle body frame 21. The bent plates 234a are provided in a pair of right and left, and they are inclined so that their respective upper parts are open to be directed to the outside of the machine body. The rib 234b is a reinforcing member of the bent plate 234a and provided along the upper-and-lower direction on a surface of the bent plate 234a to be the outside of the machine body. Moreover, a rubber material (mount rubber) 234c for suppressing vibration transmitted to the engine E is provided on the upper part of the bent plate 234a.

As described above, by diagonally supporting the engine E by the bent plate 234a, vibration of the engine E in the upper-and-lower direction and the right-and-left direction can be absorbed. As a result, the vibration transmitted to the engine E can be reduced.

### <Brake constitution>

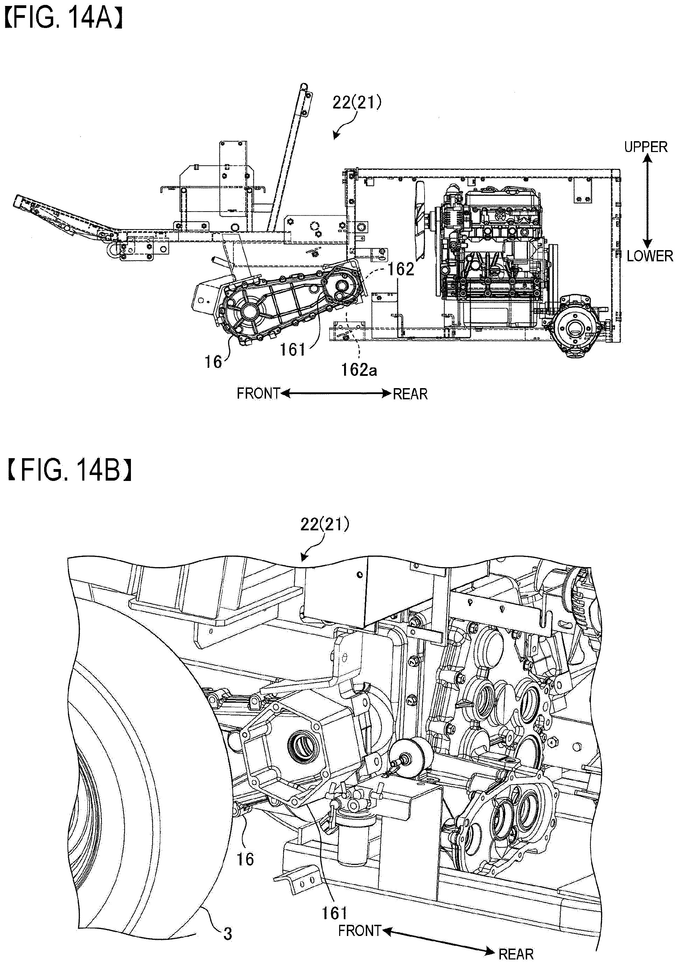

Subsequently, by referring to Figs. 14A and 14B, brake constitution will be described. Figs. 14A and 14B are explanatory views of the brake constitution. Fig. 14A illustrates a right side surface of the vehicle body frame 21. Moreover, Fig. 14B illustrates enlarged perspective of the front-wheel transmission case 16. As illustrated in Fig. 14A, the front-wheel transmission case 16 for power transmission toward the front wheel 3 (see Fig. 14B) is provided on the front part 22 of the vehicle body frame 21. As illustrated in Figs. 14A and 14B, a cylindrical portion 161 is provided on a rear end portion of the front-wheel transmission case 16, and a brake mechanism 162 is incorporated in the cylindrical portion 161. Moreover, the brake mechanism 162 includes a brake arm 162a. The brake arm 162a is provided across an inside and an outside of the cylindrical portion 161 and thus, rotation of a brake drum of the brake mechanism 162 incorporated in the cylindrical portion 161 during running of the machine body can be prevented. As a result, safety is improved.

### <Clutches 72, 73 in mission case 71>

Subsequently, by referring to Figs. 15A and 15B, clutches (blower PTO clutch 72, mower PTO clutch 73) disposed in the mission case 71 will be described. Figs. 15A and 15B are explanatory views of the clutches 72 and 73 disposed in the mission case 71. Fig. 15A illustrates an enlarged left side surface in the mission case 71, and Fig. 15B illustrates an enlarged plan in the mission case 71.

As illustrated in Figs. 15A and 15B, the blower PTO clutch 72 for connecting/disconnecting power transmitted to the blower PTO shaft 12A is disposed in the mission case 71. Moreover, the mower PTO clutch 73 for connecting/disconnecting the power transmitted to the mower PTO shaft 12B is disposed in the mission case 71. Here, the blower PTO clutch 72 and the mower PTO clutch 73 use the same clutch (that is, a clutch of the same type). As described above, since the blower PTO clutch 72 and the mower PTO clutch 73 use the same type of clutches, the two clutches 72 and 73 can be controlled with one clutch valve by providing one clutch valve for controlling the two clutches 72 and 73. That is, the clutch valve can be shared.

### <Driving control of radiator fan 81>

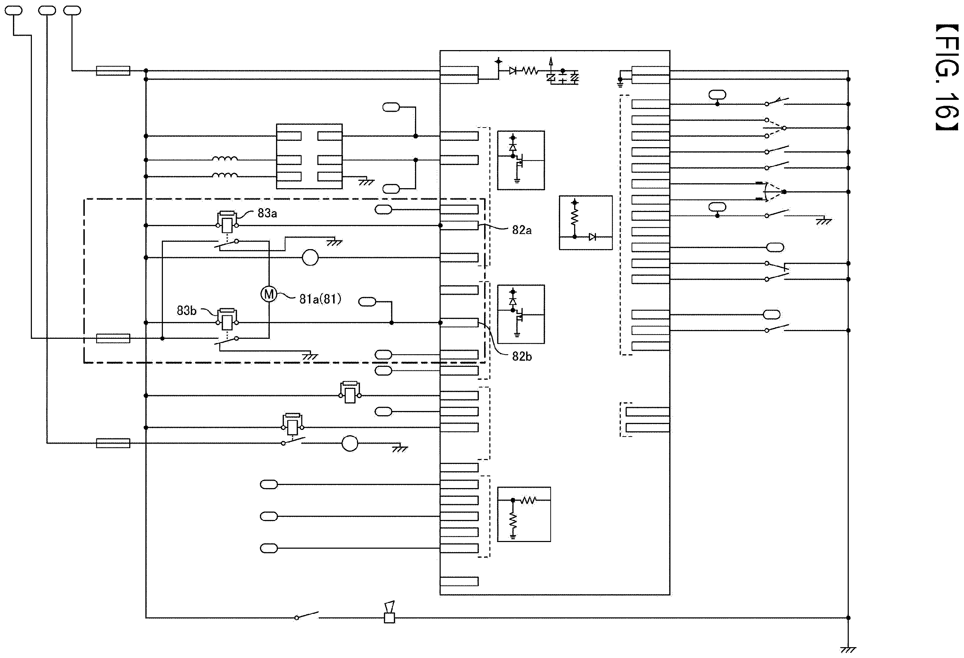

Subsequently, driving control of a radiator fan 81 will be described by referring to Fig. 16. Fig. 16 is an explanatory view of a driving circuit of the radiator fan 81. In Fig. 16, a portion relating to driving of the radiator fan 81 in each driving circuit of the lawnmower 1 is surrounded by a one-dot broken line. The radiator fan 81 is arranged between the radiator 61 (see Figs. 10A and 10B) and the engine E (see Figs. 3B and 3C). The radiator fan 81 is electronically driven and is capable of forward/reverse rotation.

As illustrated in Fig. 16, a driving motor 81a of the radiator fan 81 is rotated in either one of forward and reverse directions by switching an electric current of the driving motor 81a through two relays 83a and 83b on the basis of a rotation signal (forward rotation signal, reverse rotation signal) output from the controllers 82a and 82b. Moreover, rotation of the radiator fan 81 (driving motor 81a) is switched between forward and reverse at a predetermined interval (time) such that the direction is reversed every five minutes. In this case, when the forward rotation signal is output from the controller 82a for five minutes, the reverse rotation signal is output from the controller 82b for ten seconds.

According to such driving control, by switching the forward/reverse rotation of the radiator fan 81 at the predetermined interval, an air direction can be changed regularly so that clogging of the radiator net 611 (see Figs. 11A and 11B) can be prevented. As a result, defective driving of the radiator 61 can be suppressed, and by suppressing the defective driving of the radiator 61, overheat of the engine E can be prevented. Moreover, since the radiator fan 81 is electrically driven, an output loss can be reduced as compared with a case where power is obtained from the hydraulic circuit.

An air-cooling fan for cooling the engine E may be provided on a downstream side of the radiator fan 81 and on an upstream side of the engine E. By providing the air-cooling fan, overheat of the engine E can be further prevented.

Further effects and variations can be easily derived of by those skilled in the art. Thus, wider aspects of the present invention are not limited to specific details and representative embodiments expressed and described as above. Therefore, various changes are possible without departing from the scope of the invention defined by the appended claims.

### [Reference Signs List]

- 1: riding type lawnmower
- 2: running vehicle body
- 3: front wheel
- 4: rear wheel
- 5: mower
- 5a: mower deck
- 6: operation portion
- 6a: operator's seat
- 6b: floor step
- 6c: steering column
- 6d: steering wheel
- 7: bonnet
- 8: collector
- 10: output shaft
- 11: distribution transmission shaft
- 12A: first PTO shaft (blower PTO shaft)
- 12B: second PTO shaft (mower PTO shaft)
- 13: hydraulic continuously variable transmission (HST)
- 13a: hydraulic pump
- 13b: hydraulic motor
- 13c: trunnion arm
- 14: differential case
- 14a: gear transmitting device
- 14b: differential mechanism
- 15: differential case
- 15a: gear transmitting device
- 15b: differential mechanism
- 16: front-wheel transmission case
- 161: cylindrical portion
- 162: brake mechanism
- 162a: brake arm
- 17: axle case (rear-wheel axle case)
- 171: swing shaft
- 18: four-wheel drive shaft
- 19A: mechanic transmission
- 19B: mechanic transmission
- 19C: HST unit
- 21: vehicle body frame
- 22: front part
- 23: rear part
- 231: upper frame
- 232: lower frame
- 232a: frame constituting member
- 233: intermediate frame
- 234: engine mount portion
- 25: HST pedal
- 25a: forward pedal
- 26: rod
- 26a: forward rod
- 26b: reverse rod
- 27a: rod member
- 27b: rod member
- 28: front-side arm
- 28a: rotation fulcrum
- 29: rear-side arm
- 29a: rotation fulcrum
- 30: adjustment portion
- 31: controller/fuse
- 32: mounting stay
- 41: axle (rear-wheel axle)
- 15: four-wheel drive unit
- 61: radiator
- 611: radiator net
- 612: hole
- 62: air cleaner
- 621: lid
- 63: pipeline (suction pipe)
- 631: suction port
- 64: radiator unit
- 641: radiator bracket
- 642: fixing portion
- 642a: fixing bar
- 642b: fixing clip
- 643: supporting portion
- 71: mission case
- 72: blower PTO clutch
- 73: mower PTO clutch
- 81: radiator fan
- 81a: driving motor
- 82a: controller
- 82b: controller
- 83a: relay
- 83b: relay
- E: engine
- L1: center line (of running vehicle body)
- L2: center line (of engine)

## Claims

1. A riding type lawnmower (1), comprising:
an axle case (17) accommodating an axle (41) for driving a pair of right and left wheels (4); and
a lower frame (232) forming a lower part of a vehicle body frame (21), wherein the lower frame (232) is arranged lower than the axle case (17),
the lower frame (232) has at least two or more frame constituting members (232a) provided side by side in a right-and-left direction; **characterized in that** the axle case (17) is provided capable of swinging around a swing shaft (171) in the longitudinal direction;
the swing shaft (171) is provided in the middle in the right-and-left direction on a plan view with respect to the two or more of the frame constituting members (232a); and
the frame constituting members (232a) are configured to regulate a swing range of the rear-wheel axle case (17) swinging around the swing shaft (171).

2. The riding type lawnmower (1) according to claim 1, further comprising:
an engine (E), wherein
a shaft (18) for transmitting a driving force to the wheel (4) is provided along the longitudinal direction; and
the shaft (18) is arranged on either one of right and left sides of the engine (E).

3. The riding type lawnmower (1) according to claim 1 or 2, wherein
a rear part (23) of the vehicle body frame (21) is a box-shaped frame having an upper frame (231), a lower frame (232) arranged below the upper frame (231), and an intermediate frame (233) connecting the upper frame (231) and the lower frame (232); and
the engine (E) is supported by the lower frame (232).

4. The riding type lawnmower (1) according to claim 3, further comprising:
a radiator (61) arranged on either one of right and left sides of the vehicle body frame (21);
a radiator net (611) covering a part exposed to an outside of the radiator (61); and
an air cleaner (62) arranged on either one of the right and left sides of the vehicle body frame (21), arranged on the rear of the radiator (61) and the rear part (23) of the vehicle body frame (21), and protruding to an outer side from the vehicle body frame (21).

5. The riding type lawnmower (1) according to claim 4, wherein
an end portion (631) of an inlet pipe (63) of the air cleaner (62) is inserted into a hole (612) formed in the radiator net (611) and is arranged inside the radiator net (611).

6. The riding type lawnmower (61) according to any one of claims 2 to 5, wherein
the engine (E) is located closer to a rear side than a front wheel (3) and is located closer to a front side than a rear wheel (4), and power is made to branch from a distribution transmission shaft (11) located on the front side of the engine (E) to the front wheel (3) and the rear wheel (4), respectively, and is transmitted, the shaft (18) for transmitting the power to the rear wheel (4) is arranged on either one of the right and left sides of the engine (E).

## Patentansprüche

1. Aufsitzrasenmäher (1) mit:
einem Achsgehäuse (17), das eine Achse (41) zum Antreiben eines Paares von rechten und linken Rädern (4) aufnimmt; und
einem unteren Rahmen (232), der ein unteres Teil eines Fahrzeugkörperrahmens (21) bildet, wobei der untere Rahmen (232) niedriger als das Achsgehäuse (17) angeordnet ist,
wobei der untere Rahmen (232) mindestens zwei oder mehr rahmenbildende Bauteile (232a) hat, die in einer Rechts-Links-Richtung nebeneinander angeordnet sind;
**dadurch gekennzeichnet, dass**
das Achsgehäuse (17) vorgesehen ist, sodass es um eine Schwenkwelle (171) in der Längsrichtung schwenken kann;
die Schwenkwelle (171) in einer Draufsicht in der Mitte in der Rechts-Links-Richtung mit Bezug auf die zwei oder mehr der rahmenbildenden Bauteile (232a) vorgesehen ist; und
die rahmenbildenden Bauteile (232a) konfiguriert sind, einen Schwenkbereich des Hinterrad-Achsgehäuses (17) zu regulieren, das um die Schwenkwelle (171) schwenkt.

2. Aufsitzrasenmäher (1) nach Anspruch 1, ferner mit:
einer Kraftmaschine (E), wobei
eine Welle (18) zum Übertragen einer Antriebskraft auf das Rad (4) entlang der Längsrichtung vorgesehen ist; und
die Welle (18) auf einer der rechten und linken Seiten der Kraftmaschine (E) angeordnet ist.

3. Aufsitzrasenmäher (1) nach Anspruch 1 oder 2, wobei
ein hinteres Teil (23) des Fahrzeugkörperrahmens (21) ein kastenförmiger Rahmen ist, der einen oberen Rahmen (231), einen unteren Rahmen (232), der unterhalb des oberen Rahmens (231) angeordnet ist, und einen Zwischenrahmen (233) hat, der den oberen Rahmen (231) und den unteren Rahmen (232) verbindet; und
die Kraftmaschine (E) durch den unteren Rahmen (232) gestützt wird.

4. Aufsitzrasenmäher (1) nach Anspruch 3, ferner mit:
einem Kühler (61), der auf einer der rechten und linken Seiten des Fahrzeugkörperrahmens (21) angeordnet ist;
einem Kühlernetz (611), das ein Teil abdeckt, das zu einem Äußeren des Kühlers (61) freiliegt; und
einem Luftreiniger (62), der auf einer der rechten und linken Seiten des Fahrzeugkörperrahmens (21) angeordnet ist, der auf der Hinterseite des Kühlers (61) und des hinteren Teils (23) des Fahrzeugkörperrahmens (21) angeordnet ist, und der zu einer Außenseite des Fahrzeugkörperrahmens (21) vorsteht.

5. Aufsitzrasenmäher (1) nach Anspruch 4, wobei
ein Endabschnitt (631) eines Einlassrohrs (63) des Luftreinigers (62) in ein in dem Kühlernetz (611) ausgebildetes Loch (612) eingesetzt ist und innerhalb des Kühlernetzes (611) angeordnet ist.

6. Aufsitzrasenmäher (61) nach einem der Ansprüche 2 bis 5, wobei
die Kraftmaschine (E) näher an einer Hinterseite gelegen ist als ein Vorderrad (3) und näher an einer Vorderseite gelegen ist als ein Hinterrad (4), und Leistung von einer Verteilungsübertragungswelle (11), die an der Vorderseite des Motors (E) gelegen ist, jeweils zu dem Vorderrad (3) und dem Hinterrad (4) verzweigt wird und übertragen wird, wobei die Welle (18) zum Übertragen der Kraft zu dem Hinterrad (4) auf einer der rechten und linken Seiten des Motors (E) angeordnet ist.

## Revendications

1. Tondeuse autoportée (1) comprenant :
un carter d'essieu (17) logeant un essieu (41) pour entraîner une paire de roues droite et gauche (4) ; et
un bâti inférieur (232) formant une partie inférieure d'un châssis de véhicule (21), dans laquelle le bâti inférieur (232) est agencé plus bas que le carter d'essieu (17),
le bâti inférieur (232) a au moins deux éléments constitutifs de bâti (232a) ou plus, prévus côte à côte dans une direction droite et gauche ;
**caractérisée en ce que** le carter d'essieu (17) peut osciller autour d'un arbre d'oscillation (171) dans la direction longitudinale ;
l'arbre d'oscillation (171) est prévu au centre dans la direction droite et gauche sur une vue en plan par rapport aux deux éléments constitutifs de bâti (232a) ou plus ; et
les éléments constitutifs de bâti (232a) sont configurés pour réguler une plage d'oscillation du carter d'essieu (17) de roue arrière oscillant autour de l'arbre d'oscillation (171).

2. Tondeuse autoportée (1) selon la revendication 1, comprenant en outre :
un moteur (E), dans lequel :
un arbre (18) pour transmettre une force d'entraînement à la roue (4) est prévu le long de la direction longitudinale ; et
l'arbre (18) est agencé sur l'un des côtés droit et gauche du moteur (E).

3. Tondeuse autoportée (1) selon la revendication 1 ou 2, dans laquelle :
une partie arrière (23) du châssis de véhicule (21) est un bâti en forme de boîte ayant un bâti supérieur (231), un bâti inférieur (232) agencé au-dessous du bâti supérieur (231), et un bâti intermédiaire (233) raccordant le bâti supérieur (231) et le bâti inférieur (232) ; et
le moteur (E) est supporté par le bâti inférieur (232).

4. Tondeuse autoportée (1) selon la revendication 3, comprenant en outre :
un radiateur (61) agencé sur chacun des côtés droit et gauche du châssis de véhicule (21) ;
un filet de radiateur (611) recouvrant une partie exposée à l'extérieur du radiateur (61) ; et
un filtre à air (62) agencé sur chacun des côtés droit et gauche du châssis de véhicule (21), agencé à l'arrière du radiateur (61) et de la partie arrière (23) du châssis de véhicule (21), et faisant saillie vers un côté externe à partir du châssis de véhicule (21).

5. Tondeuse autoportée (1) selon la revendication 4, dans laquelle :
une partie d'extrémité (631) d'un tuyau d'entrée (63) du filtre à air (62) est insérée dans un trou (612) formé dans le filet de radiateur (611) et est agencée à l'intérieur du filet de radiateur (611).

6. Tondeuse autoportée (61) selon l'une quelconque des revendications 2 à 5, dans laquelle :
le moteur (E) est positionné plus à proximité d'un côté arrière qu'une roue avant (3) et est positionné plus à proximité d'un côté avant qu'une roue arrière (4), et la puissance est faite pour se ramifier à partir d'un arbre de transmission de distribution (11) positionné sur le côté avant du moteur (E) jusqu'à la roue avant (3) et la roue arrière (4), respectivement, et est transmise, l'arbre (18) pour transmettre la puissance à la roue arrière (4) est agencé sur chacun des côtés droit et gauche du moteur (E).
